# EUROPEAN PATENT SPECIFICATION

(11) **EP 3 200 296 B1**
(45) Date of publication and mention of the grant of the patent: **14.10.2020**
(21) Application number: 17153325.0
(22) Date of filing: 26.01.2017
(51) Int. Cl.: H02B 1/52

(54) **PORTABLE POWER DISTRIBUTION ASSEMBLY**
MOBILE STROMVERTEILUNGSANORDNUNG
ENSEMBLE MOBILE DE DISTRIBUTION DE ÉNERGIE

(30) Priority: 28.01.2016 SE 1650100
(43) Date of publication of application: 02.08.2017
(73) Proprietor: EL-Björn AB, 334-21 Anderstorp (SE)
(72) Inventor: PETTERSON, Roland, 334 32 Anderstorp (SE); ANDERSSON, Joakim, 334 31 Anderstorp (SE); JANSSON, Patrik, 334 91 Anderstorp (SE)
(74) Representative: Bergenstråhle Group AB

(56) References cited:
- JP-A- H08 331 712
- US-A- 5 784 249
- US-A1- 2007 253 181

## Description

### Technical Field of the Invention

The present invention relates to a portable power distribution assembly comprising a power distribution unit and a cabinet, said cabinet having an access opening for access to the interior of the cabinet.

The present invention further relates to a method of assembling a portable power distribution assembly.

### Background Art

Portable power distribution devices may be used e.g. at construction sites for temporary power supply.

SE 1200188 discloses a portable power distribution device that comprises a cabinet and a power distribution unit. The cabinet has a front opening through which the power distribution unit is inserted upon assembly of the power distribution device. After insertion of the power distribution unit it is secured to a side wall of the cabinet by means of screws.

This device has the drawback that assembly of the power distribution device is cumbersome and time consuming.

US 5 784 249 A discloses an electrical distribution panel that comprises a main housing having a plurality of openings. The distribution panel further comprises a plurality of interchangeable receptacle mounting modules, each mounting module being adapted to be mounted within one of the openings, respectively.

JP H08 331712 A appears to disclose a movable power distribution device comprising a main body and a power supply.

### Summary of the Invention

It is an object of the present invention to provide an improved portable power distribution assembly that may be assembled in an easy manner.

These and other objects that will be apparent from the following summary and description are achieved by a portable power distribution assembly according to the appended claims.

According to an aspect of the present disclosure there is provided a portable power distribution assembly comprising a power distribution unit and a cabinet, said cabinet having an access opening which forms a front opening of the cabinet, for access to the interior of the cabinet, wherein the cabinet further comprises a mounting opening which forms a top opening of the cabinet, through which a component carrier of the power distribution unit is insertable to a mounted position, wherein a base portion of the power distribution unit is configured to, together with said cabinet, form a housing accomodating the component carrier of the power distribution unit when the component carrier is in the mounted position.

The mounting opening allows the component carrier of the power distribution unit to be inserted into or withdrawn from the cabinet in a very easy manner. The component carrier unit can thus be moved to and from a mounted position in the cabinet in an easy manner. Hence, assembly of the power distribution assembly may be carried out easily and time efficient. Furthermore, replacement or service of an existing power distribution unit as well as cleaning of the interior of the cabinet may be carried out in an easy manner, since the component carrier may easily be withdrawn from a mounted position in the cabinet. The power distribution unit may thus be removed from the cabinet in an easy manner.

The housing, which is partly formed by a portion of the cabinet and partly by a portion of the power distribution unit protects the component carrier in the mounted position. Furthermore, electrical parts of the power distribution unit may be encapsulated in an inner compartment of the housing. Encapsulation of electrical parts that need to be encapsulated may thus be established in an easy manner upon assembly of the power distribution assembly.

Upon assembly, the component carrier is thus moved to a mounted position in the cabinet and upon disassembly the component carrier is removed from the mounted position.

The access opening serves to provide access to the interior of the cabinet and thus provides for easy use of the power distribution assembly, i.e. easy connection of cables, exchange of fuses etc.

According to one embodiment the component carrier is movable along a substantially linear path to the mounted position in the cabinet.

The mounting opening is disposed at the upper part of the cabinet.

According to the invention the mounting opening forms a top opening of the cabinet. Such a top opening allows the component carrier to be inserted into the cabinet from an elevated position in a very easy manner, since gravity acts to position the component carrier in the cabinet.

The access opening forms a front opening of the cabinet. A frontal access opening provides for easy use of the portable power distribution assembly.

According to one embodiment the access opening is disposed in a first plane and the mounting opening is disposed in a second plane, said second plane being substantially perpendicular to said first plane. A mounting opening arranged in a plane perpendicular to the plane of the access opening provides for easy insertion of the component carrier through a top opening of the cabinet, yet providing easy access to the interior of the cabinet, and thus to the component carrier when mounted in the cabinet, through a frontal access opening of the cabinet.

According to one embodiment a portion of the cabinet and a portion of the power distribution unit together form an encapsulation for electrical parts of the power distribution unit when the component carrier is in the mounted position. This has the advantage that electrical parts of the power distribution unit are encapsulated and thus well protected against rain etc. when the power distribution assembly is assembled.

According to one embodiment said base portion of the power distribution unit is configured to at least partly cover said mounting opening when the component carrier is in the mounted position. This has the advantage that components of the power distribution unit are protected against rain etc. when the power distribution assembly is assembled.

According to one embodiment said base portion is configured to completely cover said mounting opening when the component carrier is in the mounted position, in order to provide a complete protection of components of the power distribution unit against rain etc. when the power distribution assembly is assembled.

According to one embodiment the base portion is provided with at least one handle. This has the advantage that the power distribution unit may be handled in an easy manner, e.g. when inserted into, or withdrawn from, the cabinet.

According to one embodiment the base portion of the power distribution unit is a support plate that is configured to form a lid covering said mounting opening when the component carrier is in the mounted position. This has the advantage that components of the power distribution unit are protected against rain etc. when the power distribution assembly is assembled, i.e. when the component carrier is mounted in the cabinet.

According to one embodiment the cabinet comprises an access door being movable between a closed position, in which it covers the access opening, and an open position in which the interior of the cabinet is exposed. The access door may thus protect a component carrier mounted inside the cabinet. In this embodiment access to the interior of the cabinet is established by moving the access door from the closed position to the open position.

According to one embodiment the access door is pivotally connected to a body of the cabinet, which enables easy opening and closing of the access door.

According to one embodiment the cabinet is provided with a retaining device, e.g. in the form of a bent element, configured to, upon insertion of the component carrier of the power distribution unit into the cabinet, mechanically engage an engagement portion of the component carrier. When the component carrier is mounted in the cabinet the retaining device maintains the power distribution unit in a predetermined position and prevents it from pivoting relative to the cabinet. Thereby, the retaining element holds the power distribution unit in place in a robust manner.

According to another aspect of the present disclosure, there is provided a method of assembling a portable power distribution assembly, the portable power distribution assembly comprising a power distribution unit and a cabinet, said cabinet having an access opening for access to the interior of the cabinet and a mounting opening, the method comprising inserting a component carrier of the power distribution unit through said mounting opening and moving the component carrier along a substantially linear path to a mounted position in the cabinet.

According to one embodiment the access opening is disposed in a first plane and the mounting opening is disposed in a second plane, said second plane being substantially perpendicular to said first plane.

According to the invention the component carrier is inserted into the cabinet in a substantially vertical direction. This embodiment has the advantage that the component carrier is inserted, from an elevated position, into the cabinet in a very easy manner, since gravity acts to position the component carrier in a mounted position in the cabinet.

According to one embodiment a base portion of the power distribution unit form, together with said cabinet, a housing when the component carrier reaches the mounted position.

These and other aspects of the invention will be apparent from and elucidated with reference to the claims and the embodiments described hereinafter.

### Brief Description of the Drawings

The invention will hereafter be described in more detail and with reference to the appended schematic drawings.
Fig. 1a is a perspective view of a portable power distribution assembly according to an embodiment of the present disclosure in an unassembled state.
Fig. 1b is a section of the portable power distribution assembly in Fig. 1a taken along line A-A.
Fig. 2a is a perspective view of the portable power distribution assembly in Fig. 1a in an assembled state, an access door of the assembly being in an open position.
Fig. 2b is a section of the portable power distribution assembly in Fig. 2a taken along line A-A.
Fig. 3 is a perspective view of the portable power distribution assembly in Fig. 1a in an assembled state, the access door of the assembly being in a closed position.

### Detailed Description of Preferred Embodiments of the Invention

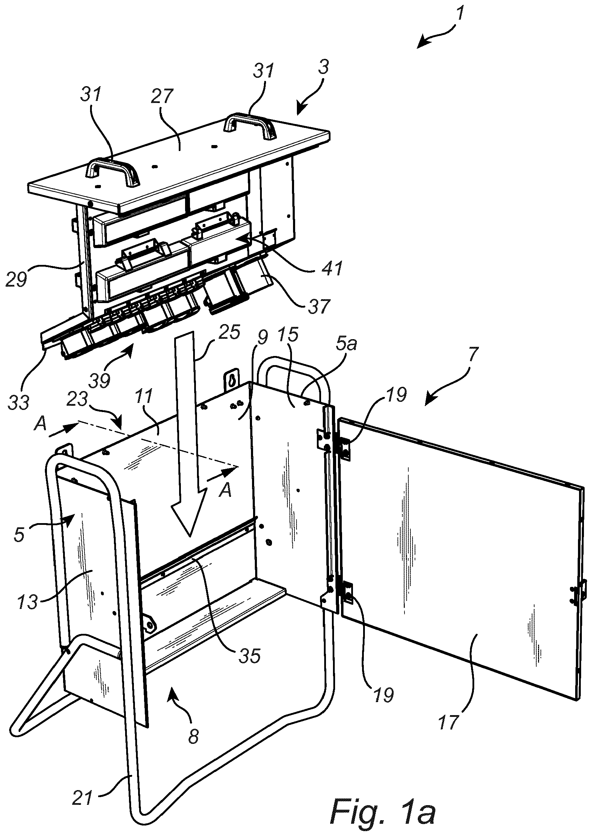

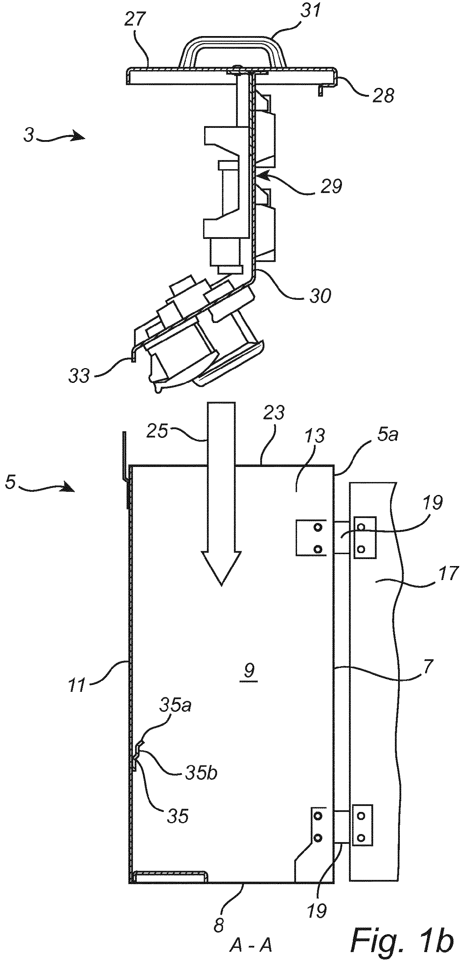

Figs. 1a-b illustrate a portable power distribution assembly 1 according to an embodiment of the present invention in an unassembled state. The portable power distribution assembly 1 comprises a power distribution unit 3 and a cabinet 5. The cabinet 5 has a first access opening, which comprises a front opening 7, and a second access opening, which comprises a bottom opening 8, for access to the interior 9 of the cabinet 5 and connection of cables (not shown) to the power distribution unit 3. The cabinet 5 comprises a rear wall 11, two side walls 13, 15 and an access door 17 which is pivotably connected to one 15 of the side walls 13, 15 by means of hinges 19 and arranged to cover the front opening 7 of the first access opening and form a front wall of the cabinet 5. A foldable stand 21 is mounted to the side walls 13, 15 of the cabinet 5 and configured to hold the cabinet 5 above the ground.

The cabinet 5 further comprises a mounting opening, in the form of a top opening 23, through which a component carrier 29 of the power distribution unit 3 is insertable along a linear path, as illustrated by arrow 25.

The power distribution unit 3 comprises a support plate 27 and the component carrier 29 which is attached to the support plate 27.

The support plate 27, which comprises a bent steel sheet 28, is configured to rest on an upper portion 5a of the cabinet 5 and form a top cover or lid covering the mounting opening 23. Handles 31 for moving the unit 3 are mounted to the support plate 27.

The component carrier 29, which comprises a bent steel sheet 30, is screwed to the support plate 27. A lower end of the component carrier 29 forms an engagement means 33 which is configured to engage a retaining element 35 of the cabinet 5 upon insertion of the component carrier 29 into the cabinet 5. The retaining element 35 has a guiding portion 35a for guiding the engagement portion 33 of the component carrier 29 and a retaining portion 35b for locking the engagement portion to the rear wall 11 of the cabinet 5 for maintaining the component carrier 29 in a mounted position. The retaining portion 35b and the rear wall 11 of the cabinet 5 together form a robust lateral support for the component carrier 29. The retaining device 35 thus prevents lateral movement, yet providing withdrawal of the power distribution unit 3 from the cabinet 5.

The component carrier 29 carries an inlet socket 37, outlet sockets 39 and fuses 41.

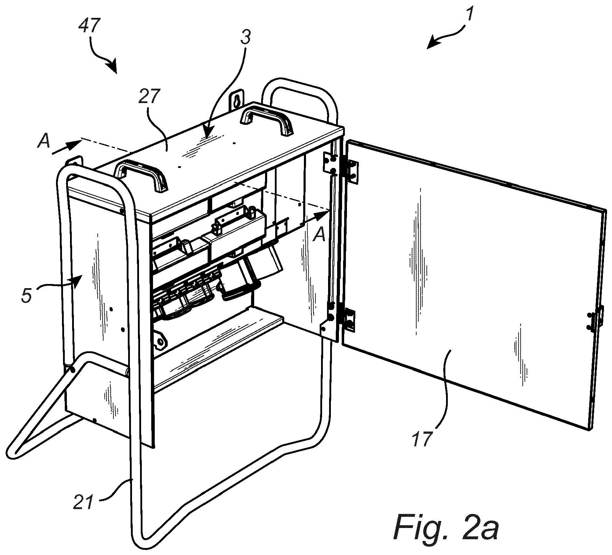

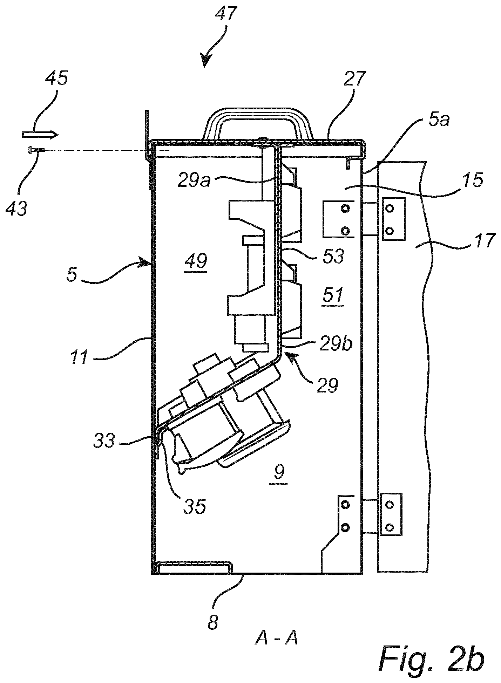

Figs. 2a-b shows the assembly in an assembled state, i.e. when the component carrier is in the mounted position. Then, the support plate 27, and the cabinet 5 together form a housing 47 accomodating the component carrier 29. The housing 47 has an openable door 17 which is opened in Fig. 2.

Furthermore, the support plate 27, an inner face 29a of the component carrier 29 and side walls 11, 13, 15 of the cabinet 5 together form an inner compartment 49 encapsulating electrical parts of the power distribution unit 3. The inner compartment 49 of the housing 47 thus forms an encapsulation configured to encapsulate electrical parts of the power distribution unit 3.

Also, the support plate 27, an outer face 29b of the component carrier 29 and side walls 11, 13, 15 of the cabinet 5 together form an outer compartment 51 for sockets and fuses etc.

The component carrier 29 thus form an inner wall 53 of the housing 47. The inner wall 53 separates the inner compartment 49 from the outer compartment 51.

In this embodiment the portable power distribution assembly 1 comprises locking means, in the form of screws 43, for locking the power distribution unit 3 to the cabinet 5, as illustrated by arrow 45 in Fig. 2b.

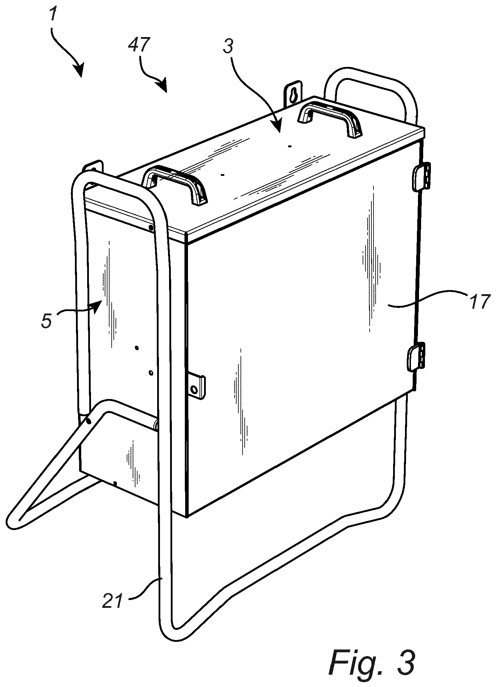

Fig. 3 shows the portable power distribution assembly 1 in an assembled state and with the access door 17 in a closed position.

It is realized by a person skilled in the art that features from various embodiments disclosed herein may be combined with one another in order to provide further alternative embodiments within the scope of the appended claims.

## Claims

1. A portable power distribution assembly (1) comprising a power distribution unit (3) and a cabinet (5), said cabinet (5) having an access opening (7) that forms a front opening of the cabinet (5) for access to the interior (9) of the cabinet (5),
**characterized in that**
the cabinet (5) further comprises a mounting opening (23) that forms a top opening of the cabinet (5) through which a component carrier (29) of the power distribution unit (3) is insertable to a mounted position, wherein
a base portion (27) of the power distribution unit (3) is configured to, when the component carrier (29) is in the mounted position, at least partly cover said mounting opening (23) and, together with said cabinet (5), form a housing (47) accommodating the component carrier (29) of the power distribution unit (3).

2. Portable power distribution assembly according to claim 1, wherein the component carrier (29) is movable along a substantially linear path to the mounted position in the cabinet (5).

3. Portable power distribution assembly according to any one of the preceding claims, wherein the access opening (7) is disposed in a first plane and the mounting opening (23) is disposed in a second plane, said second plane being substantially perpendicular to said first plane.

4. Portable power distribution assembly according to any one of the preceding claims, wherein a portion (11, 13, 15) of the cabinet (5) and a portion (27, 29) of the power distribution unit (3) together form an encapsulation (49) for electrical parts of the power distribution unit (3) when the component carrier (29) is in the mounted position.

5. Portable power distribution assembly according to claim 4, wherein said base portion (27) is configured to completely cover said mounting opening (23) when the component carrier (29) is in the mounted position.

6. Portable power distribution assembly according to any one of the claims 4-5, wherein the base portion (27) is provided with at least one handle (31).

7. Portable power distribution assembly according to any one of the preceding claims, wherein the base portion of the power distribution unit (3) is a support plate (27) that is configured to form a lid covering said mounting opening (23) when the component carrier (29) is in the mounted position.

8. Portable power distribution assembly according to any one of the preceding claims, wherein the cabinet (5) comprises an access door (17) being movable between a closed position, in which it covers the access opening (7), and an open position in which the interior (9) of the cabinet (5) is exposed.

9. Portable power distribution assembly according to any one of the preceding claims, wherein the access door (17) is pivotally connected to a body (11, 13, 15) of the cabinet (5).

10. Portable power distribution assembly according to any one of the preceding claims, wherein the cabinet (5) is provided with a retaining device (35) configured to, upon insertion of the component carrier (29) into the cabinet (5), mechanically engage an engagement portion (33) of the component carrier (29).

11. Method of assembling a portable power distribution assembly (1), as defined in any of the preceding claims, the method being **characterized in** inserting the component carrier (29) of the power distribution unit (3) through said mounting opening (23) and moving the component carrier (29) along a vertical direction to a mounted position in the cabinet (5), in which position the base portion (27) of the power distribution unit (3) at least partly covers said mounting opening (23) and forms, together with said cabinet (5), a housing (47) accommodating the component carrier (29) of the power distribution unit (3).

## Patentansprüche

1. Mobile Stromverteilungsanordnung (1), umfassend eine Stromverteilungseinheit (3) und einen Schrank (5), wobei der Schrank (5) eine Zugangsöffnung (7) aufweist, die eine vordere Öffnung des Schranks (5) für den Zugang zum Inneren (9) des Schranks (5) bildet,
**dadurch gekennzeichnet, dass**
der Schrank (5) ferner eine Montageöffnung (23) umfasst, die eine obere Öffnung des Schranks (5) bildet, durch die ein Komponententräger (29) der Stromverteilungseinheit (3) in eine montierte Position einführbar ist, wobei ein Basisabschnitt (27) der Stromverteilungseinheit (3), wenn sich der Komponententräger (29) in der montierten Position befindet, dafür ausgelegt ist, die Montageöffnung (23) zumindest teilweise zu bedecken und zusammen mit dem Schrank (5) ein Gehäuse (47) zu bilden, das den Komponententräger (29) der Stromverteilungseinheit (3) aufnimmt.

2. Mobile Stromverteilungsanordnung nach Anspruch 1, wobei der Komponententräger (29) entlang eines im Wesentlichen linearen Wegs in die montierte Position im Schrank (5) bewegbar ist.

3. Mobile Stromverteilungsanordnung nach einem der vorhergehenden Ansprüche, wobei die Zugangsöffnung (7) in einer ersten Ebene und die Montageöffnung (23) in einer zweiten Ebene eingerichtet ist, wobei die zweite Ebene im Wesentlichen senkrecht zur ersten Ebene ist.

4. Mobile Stromverteilungsanordnung nach einem der vorhergehenden Ansprüche, wobei ein Abschnitt (11, 13, 15) des Schranks (5) und ein Abschnitt (27, 29) der Stromverteilungseinheit (3) zusammen eine Kapselung (49) für elektrische Teile der Stromverteilungseinheit (3) bilden, wenn sich der Komponententräger (29) in der montierten Position befindet.

5. Mobile Stromverteilungsanordnung nach Anspruch 4, wobei der Basisabschnitt (27) dafür ausgelegt ist, die Montageöffnung (23) vollständig zu bedecken, wenn sich der Komponententräger (29) in der montierten Position befindet.

6. Mobile Stromverteilungsanordnung nach einem der Ansprüche 4 bis 5, wobei der Basisabschnitt (27) mit mindestens einem Griff (31) bereitgestellt ist.

7. Mobile Stromverteilungsanordnung nach einem der vorhergehenden Ansprüche, wobei der Basisabschnitt der Stromverteilungseinheit (3) eine Trägerplatte (27) ist, die dafür ausgelegt ist, einen Deckel zu bilden, der die Montageöffnung (23) bedeckt, wenn sich der Komponententräger (29) in der montierten Position befindet.

8. Mobile Stromverteilungsanordnung nach einem der vorhergehenden Ansprüche, wobei der Schrank (5) eine Zugangstür (17) umfasst, die zwischen einer geschlossenen Stellung, in der sie die Zugangsöffnung (7) bedeckt, und einer offenen Stellung, in der das Innere (9) des Schranks (5) freiliegt, bewegbar ist.

9. Mobile Stromverteilungsanordnung nach einem der vorhergehenden Ansprüche, wobei die Zugangstür (17) schwenkbar mit einem Körper (11, 13, 15) des Schranks (5) verbunden ist.

10. Mobile Stromverteilungsanordnung nach einem der vorhergehenden Ansprüche, wobei der Schrank (5) mit einer Rückhaltevorrichtung (35) bereitgestellt ist, die dafür ausgelegt ist, beim Einsetzen des Komponententrägers (29) in den Schrank (5) mechanisch in einen Eingriffsabschnitt (33) des Komponententrägers (29) einzugreifen.

11. Verfahren zum Zusammenbau einer mobilen Stromverteilungsanordnung (1) nach einem der vorhergehenden Ansprüche, wobei das Verfahren **dadurch gekennzeichnet ist, dass** der Komponententräger (29) der Stromverteilungseinheit (3) durch die Montageöffnung (23) eingeführt wird und der Komponententräger (29) entlang einer vertikalen Richtung zu einer montierten Position im Schrank (5) bewegt wird, wobei in dieser Position der Basisabschnitt (27) der Stromverteilungseinheit (3) zumindest teilweise die Montageöffnung (23) bedeckt und zusammen mit dem Schrank (5) ein Gehäuse (47) bildet, das den Komponententräger (29) der Stromverteilungseinheit (3) aufnimmt.

## Revendications

1. Ensemble mobile de distribution d'énergie (1) comprenant une unité de distribution d'énergie (3) et une armoire (5), ladite armoire (5) ayant une ouverture d'accès (7) qui forme une ouverture frontale de l'armoire (5) pour permettre un accès à l'espace intérieur (9) de l'armoire (5),
**caractérisé en ce que**
l'armoire (5) comprend en outre une ouverture de montage (23) qui forme une ouverture supérieure de l'armoire (5) à travers laquelle un support de composant (29) de l'unité de distribution d'énergie (3) est insérable à une position montée, dans lequel
une portion base (27) de l'unité de distribution d'énergie (3) est configurée pour, lorsque le support de composant (29) se trouve dans la position montée, couvrir au moins partiellement ladite ouverture de montage (23) et, en conjonction avec ladite armoire (5), former un logement (47) accueillant le support de composant (29) de l'unité de distribution d'énergie (3).

2. Ensemble mobile de distribution d'énergie selon la revendication 1, dans lequel le support de composant (29) est apte à être déplacé le long d'un trajet substantiellement linéaire jusqu'à la position montée dans l'armoire (5).

3. Ensemble mobile de distribution d'énergie selon l'une quelconque des revendications précédentes, dans lequel l'ouverture d'accès (7) est disposée dans un premier plan et l'ouverture de montage (23) est disposée dans un deuxième plan, ledit deuxième plan étant substantiellement perpendiculaire audit premier plan.

4. Ensemble mobile de distribution d'énergie selon l'une quelconque des revendications précédentes, dans lequel une portion (11, 13, 15) de l'armoire (5) et une portion (27, 29) de l'unité de distribution d'énergie (3) forment ensemble un enrobage (49) pour des pièces électriques de l'unité de distribution d'énergie (3) lorsque le support de composant (29) se trouve dans la position montée.

5. Ensemble mobile de distribution d'énergie selon la revendication 4, dans lequel ladite portion base (27) est configurée pour couvrir complètement ladite ouverture de montage (23) lorsque le support de composant (29) se trouve dans la position montée.

6. Ensemble mobile de distribution d'énergie selon l'une quelconque des revendications 4 à 5, dans lequel la portion base (27) est pourvue d'au moins une poignée (31) .

7. Ensemble mobile de distribution d'énergie selon l'une quelconque des revendications précédentes, dans lequel la portion base de l'unité de distribution d'énergie (3) est une plaque de soutien (27) qui est configurée pour former un couvercle couvrant ladite ouverture de montage (23) lorsque le support de composant (29) se trouve dans la position montée.

8. Ensemble mobile de distribution d'énergie selon l'une quelconque des revendications précédentes, dans lequel l'armoire (5) comprend une porte d'accès (17) apte à être déplacée entre une position fermée, dans laquelle elle couvre l'ouverture d'accès (7), et une position ouverte dans laquelle l'espace intérieur (9) de l'armoire (5) est exposé.

9. Ensemble mobile de distribution d'énergie selon l'une quelconque des revendications précédentes, dans lequel la porte d'accès (17) est raccordée par pivotement à un corps (11, 13, 15) de l'armoire (5).

10. Ensemble mobile de distribution d'énergie selon l'une quelconque des revendications précédentes, dans lequel l'armoire (5) est pourvue d'un dispositif de retenue (35) configuré pour, lors de l'insertion du support de composant (29) dans l'armoire (5), se mettre mécaniquement en prise avec une portion de mise en prise (33) du support de composant (29).

11. Procédé d'assemblage d'un ensemble mobile de distribution d'énergie (1), tel que défini dans n'importe lesquelles des revendications précédentes, le procédé étant **caractérisé par** le fait d'insérer le support de composant (29) de l'unité de distribution d'énergie (3) à travers ladite ouverture de montage (23) et le fait de déplacer le support de composant (29) le long d'un sens vertical jusqu'à une position montée dans l'armoire (5), position dans laquelle la portion base (27) de l'unité de distribution d'énergie (3) couvre au moins partiellement ladite ouverture de montage (23) et forme, en conjonction avec ladite armoire (5), un logement (47) accueillant le support de composant (29) de l'unité de distribution d'énergie (3).
